# EUROPEAN PATENT SPECIFICATION

(11) **EP 3 088 643 B1**
(45) Date of publication and mention of the grant of the patent: **21.11.2018**
(21) Application number: 14875209.0
(22) Date of filing: 18.09.2014
(51) Int. Cl.: E05B 85/02, E05B 79/08, E05B 85/24

(54) **DOOR LATCH DEVICE FOR VEHICLE**
TÜRVERRIEGELUNGSVORRICHTUNG FÜR EIN FAHRZEUG
DISPOSITIF DE VERROUILLAGE DE PORTES POUR VEHICULE

(30) Priority: 27.12.2013 JP 2013271442
(43) Date of publication of application: 02.11.2016
(73) Proprietor: Mitsui Kinzoku ACT Corporation, Yokohama-shi Kanagawa 220-0011 (JP)
(72) Inventor: NAGAOKA Tomoharu, Yokohama-shi Kanagawa 231-0813 (JP); NOZAWA Hideaki, Yokohama-shi Kanagawa 231-0813 (JP); SHIMURA Ryoji, Yokohama-shi Kanagawa 220-0011 (JP)
(74) Representative: Grünecker Patent- und Rechtsanwälte PartG mbB
(86) International application number: PCT/JP2014/074701
(87) International publication number: WO 2015/098205

(56) References cited:
- EP-A1- 2 196 606
- WO-A1-2012/056869
- JP-A- 2010 031 521
- JP-A- 2011 226 176
- JP-A- 2013 117 115

## Description

### Technical Field

The present invention relates to a vehicle door latch device which can be made small in size and light in weight.

### Background Art

A vehicle door latch device described in JP 2007-197973 A includes a resin body (a "latch body" in that document) which is opened on a front surface and which has an accommodating portion to accommodate rotatably a latch and a pawl (similarly, a "ratchet") therein, a metallic cover plate which is fixed to the surface of the resin body so as to close the accommodating portion, and a metallic back plate (similarly, a "base plate") which is fixed to a rear surface of the resin body. A collar-headed latch shaft (similarly, a "latch rotary shaft") configured to pivot the latch and a collar-headed ratchet shaft (similarly, a "ratchet rotary shaft") configured to pivot a pawl are individually inserted from the back plate side for penetration through the resin body and the cover plate, and respective distal end portions of the collar-headed latch shaft and the collar-headed ratchet shaft which project from a front surface of the cover plate are crimped.

In addition, a plurality of fastening bolts penetrate mounting holes in an inner panel of a door, mounting holes of the cover plate, and the resin body to be screwed
into threaded holes of the back plate to thereby fixedly fasten a body of the door latch device to the inner panel. Further state of the art door latch devices can be found in documents JP 2013 - 117115 A, WO 2012/056869 A, JP 2011 - 226176 A and EP 219-6606 A.

### Summary of the Invention

### Technical Problem

In the vehicle door latch device described in JP 2007-197973 A, however, the following operations need to be performed. Various levers are assembled to the collar-headed latch shaft and the collar-headed ratchet shaft to be stacked one on another thereon, and thereafter, the collar-headed latch shaft and the collar-headed ratchet shaft are caused to penetrate a lock lever bearing hole and a ratchet bearing hole of the back plate in such a way that the back plate having a large surface area is placed on the various levers. Thus, these operations interrupt an attempt to realize efficient assembling work.

Further, since there are provided in the back plate the plurality of threaded holes for screw engagement with the plurality of fastening bolts, this triggers an unnecessarily great increase in size of the back plate, calling for an increase in size and weight of the door latch device.

The invention has been made in view of the problem described above, and an object thereof is to provide a vehicle door latch device which can realize not only efficient assembling work but also a reduction in size and weight thereof.

### Solution to Problem

The problem will be solved as follows.

A vehicle door latch device is configured to comprise: a body having an accommodating portion that opens on a front surface; a cover plate that is fixed to the body so as to close an opening of the accommodating portion; a back plate that is fixed to a rear surface of the body; a latch, which is pivoted on a latch shaft so as to be rotatable in the accommodating portion, and which is meshable with a striker entering a striker entering groove provided in the body; and a pawl, which is rotatably supported in the accommodating portion, and which is engageable with the latch in a rotating direction, wherein the cover plate comprises: a front-side first shaft hole, through which the latch penetrates; a front-side second shaft hole, into which a first shaft portion is inserted rotatably, the first shaft portion being formed at one end portion of the pawl; a fastening hole, through which a single bolt of a plurality of door fixing bolts penetrates; and a plurality of threaded holes, into which other bolts, other than said single bolt, of the plurality of door fixing bolts are screwed, wherein the latch shaft is formed into a collar-headed shape that is penetratable the front-side first shaft hole and a shaft hole of the latch from a front surface side of the cover plate, wherein the back plate comprises: a rear-side first shaft hole forming portion that forms a rear-side first shaft hole, wherein a distal end portion of the latch shaft which penetrates the shaft hole of the latch is inserted into the rear-side first shaft hole while being prevented from being dislocated therefrom; a rear-side second shaft hole forming portion that forms a rear-side second shaft hole, into which a second shaft portion is inserted rotatably, wherein the second shaft portion is formed at another end portion of the pawl; and a threaded hole forming portion that forms a single threaded hole, into which said single bolt is screwed, wherein threaded hole forming portion is disposed near the rear-side second shaft hole forming portion, and wherein the back plate is shaped so as not to extend to portions corresponding to positions of said other bolts.

By adopting the configuration described above, in such a state that the collar-headed latch shaft is inserted into the front-side first shaft hole, all the elements including the latch, the body, the pawl and the back plate can be assembled from the same direction, whereby the assembling work can be performed efficiently.

In addition, since the back plate is fixed by fastening the vicinity of the rear-side second shaft hole forming portion where the second shaft portion of the pawl is supported rotatably, that is, the threaded hole forming portion with the single bolt and is shaped so as not to extend to the portion which corresponds to the positions of the plurality of bolts which are screwed in the threaded holes of the cover plate, the second shaft portion of the pawl can be supported strongly and rigidly, whereby the back plate can be made smaller in size while ensuring the same meshing strength as that provided by the prior art, thereby making it possible to realize a reduction in size and weight of the door latch device.

Incidentally, the body may have a pawl assembling hole that enables an assemblage of the pawl into the accommodating portion from a rear side of the body.
According thereto, the pawl can be assembled simply into the accommodating portion from the rear side of the pawl, thereby making it possible to realize an improvement in efficiency of the assembling work.

Further, a bumper rubber may be assembled into the striker entering groove of the body so that the striker can collide therewith, and the body may have a bumper rubber assembling hole that enables the bumper rubber to be assembled into the striker entering groove from the rear side of the body. According thereto, the bumper rubber can be assembled simply into the striker entering groove from the rear side of the body, thereby making it possible to realize an improvement in efficiency of the assembling work.

Further, the back plate may comprise a holding portion which is coverable the bumper rubber assembling hole partially or entirely. According thereto, the bumper rubber can be fixed within in the striker entering groove of the body in an ensured fashion.

Further, a shaft portion may be provided on the rear surface of the body so as to be oriented in the same direction as that of the latch shaft, and an outside lever may be pivoted on the shaft portion that is disposed between the rear surface of the body and the back plate, wherein the outside lever may be connected to an operating handle provided on a door for activating a door opening operation. According thereto, the outside lever can be assembled from the same direction as the individual elements.

### Advantageous Effects of Invention

According to the invention, in such a state that the latch shaft is inserted into the front-side first shaft hole of the cover plate, the latch, the body, the pawl and the back plate can be assembled from the same direction, whereby not only can the assembling work be performed efficiently, but also the back plate can be made smaller in size, thereby making it possible to realize a reduction in size and weight of the door latch device.

### Brief Description of Drawings

[Fig. 1] A perspective view showing a door latch device of an embodiment of the invention together with a door.
[Fig. 2] A front view of the door latch device shown in Fig. 1.
[Fig. 3] A rear view of the door latch device shown in Fig. 1.
[Fig. 4] An exploded perspective view showing a state of the door latch device shown in Fig. 1 as viewed obliquely from a front side thereof.
[Fig. 5] An exploded perspective view showing a state of the door latch device shown in Fig. 1 as viewed obliquely from a rear side thereof.
[Fig. 6] A sectional view taken along a line VI-VI in Fig. 3.
[Fig. 7] A sectional view taken along a line VII-VII in Fig. 3.
[Fig. 8] An enlarged sectional view taken along a line VIII-VIII in Fig. 2.

### Detailed Description

Hereinafter, an embodiment of the invention will be described based on the drawings.

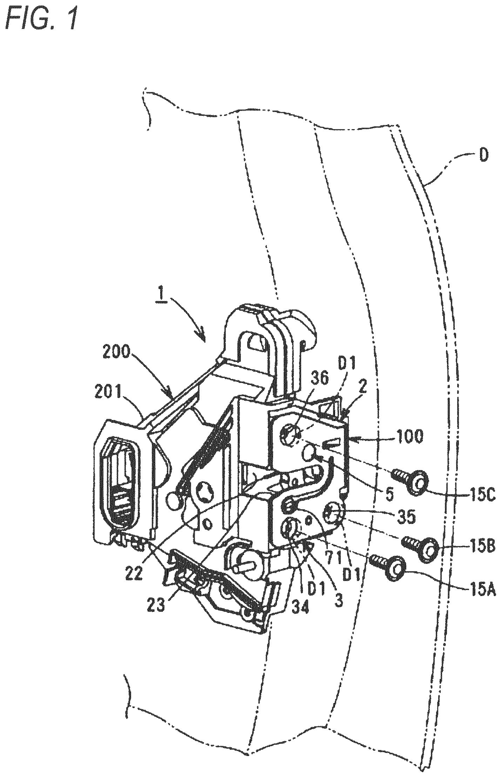

As shown in Fig. 1, a door latch device I includes a meshing structure 100 which includes various meshing elements and operating elements which are fixed in a door D which is supported on a vehicle body so as to be opened and closed and which are configured to mesh with a striker S which is fixed to the vehicle body to thereby restrain the door D in a closed state and an operating structure 200 which is connected to the meshing structure 100 and which includes various releasing elements which are operated to release the meshing of the various meshing elements with the striker S.

The various releasing elements, which are not shown, in the operating structure 200 are assembled within a synthetic resin casing 201 which defines an external appearance of the operating structure 200 and are connected to a door opening outside handle (not shown) which is provided on an outboard side of the door D, a locking and unlocking key cylinder (not shown), a door opening inside handle (not shown) which is provided on an inboard side of the door D and a locking and unlocking lock knob (not shown) so as to be interlocked with operations thereof. When the door D is unlocked, as the outside handle and the inside handle are operated to open the door D, the various releasing elements are activated to perform a releasing operation and transmit the releasing operation to a pawl 7, which is one of the meshing elements and will be described later, causing the pawl 7 to perform a releasing operation, whereby the door D can be opened. The configurations of the various releasing elements are known in the prior art technology and therefore, a detailed description thereof will be omitted here.

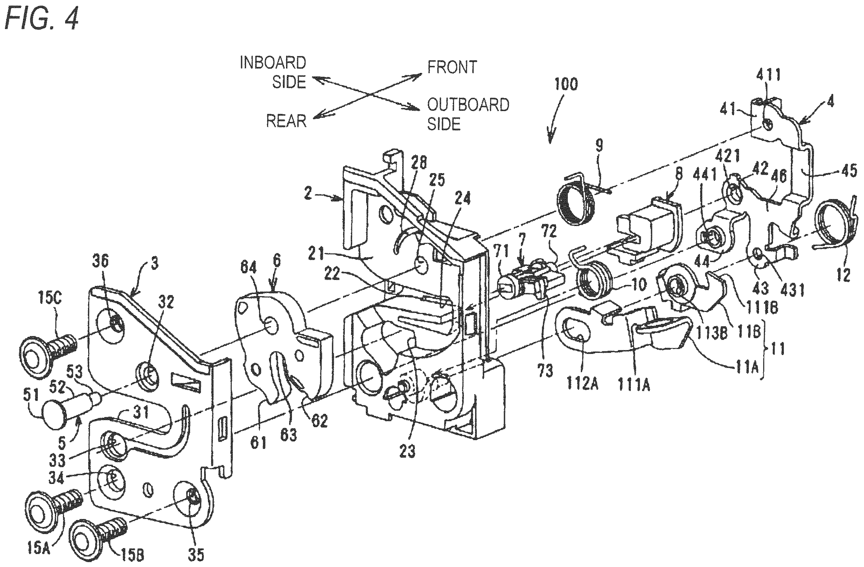

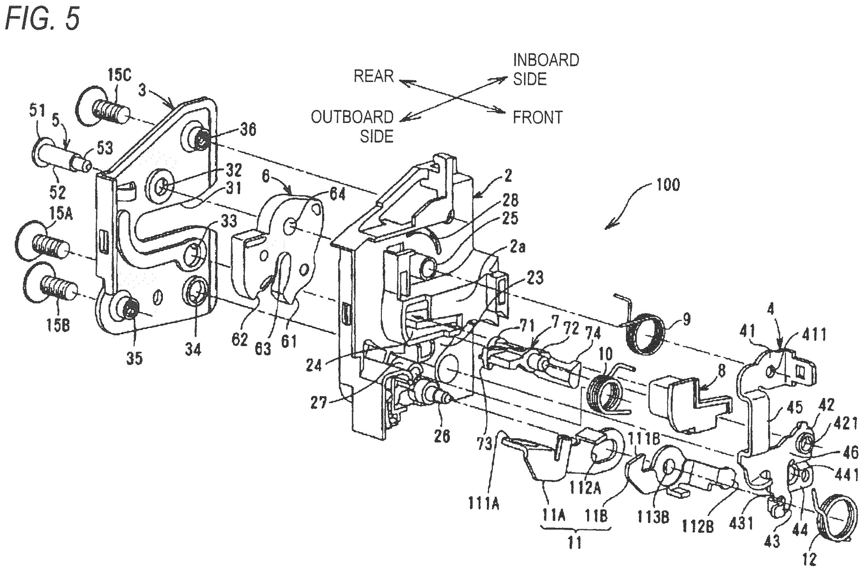

As shown mainly in Figs. 4, 5, the meshing structure 100 includes a body module (no reference numeral given) which includes a synthetic resin body 2, a metallic cover plate 3 which is fixed to a rear surface side of the body 2 and a metallic back plate 4 which is fixed to a front surface side of the body 2 and various meshing elements (a latch 6, a pawl 7, a bumper rubber 8, springs 9, 10 and the like which will be described later) and operating elements (an outside lever 11, a spring 12 and the like which will be described later) which are assembled to the body module. The body module is fixedly fastened to an inner surface of an inner panel of the door D with three bolts 15A to 15C which penetrate mounting holes D1 which are provided in the inner panel of the door D.

With the door latch device I mounted in the door D, an oblique left downward direction in Fig. 4 and an oblique left upward direction in Fig. 5 denote "rear" and an oblique right upward direction in Fig. 4 and an oblique right downward direction in Fig. 5 denote "front." However, when used in the following description, for the sake of convenience in description, "rear surface" and "rear side" will be replaced, respectively, by "front surface" and "front side" for use, and "front surface" and "front side" will be replaced, respectively, by "rear surface" and "rear side" for used. Then, "at or to the front," "at or to the rear" and "front-to-rear direction" wilt be used as they are.

The body 2 has a recessed accommodating portion 21 which opens on a front surface thereof, a striker entering groove 22 which is located substantially at a vertical central portion of the accommodating portion 21 so that the striker S enters when the door is closed, a pawl assembling hole 23 which enables the pawl 7, which is part of the various meshing elements and which will be described later, to be assembled into the accommodating portion 21 from a rear side of the body 2, a bumper rubber assembling hole 24 which is inside the striker entering groove 22 and which enables the bumper rubber 8 which is formed of an elastic member such as rubber to be assembled into the striker entering groove 22 from the rear side of the body 2, a cylindrical portion 25 which is disposed above the striker entering groove 22 on a rear surface to project to the front, and a shaft portion 26 and a cylindrical portion 27 which are disposed below the striker entering groove 22 on the rear surface to project to the front (the same direction as an axial direction of a collar-headed latch shaft 5, which will be described later).

The cover plate 3 is fixed to a front surface of the body 2 so as to close the accommodating portion 21 and has a cutout portion 31 which the striker S can enter when the door D is closed, a front-side first shaft hole 32 which is formed above the cutout portion 31 and into which the collar-head shaft 5, which is one of the various meshing elements and which will be described later, is inserted, a front-side second shaft hole 33 which is formed below the cutout portion 31 and into which a first shaft portion 71 of the pawl 7, which is one of the various meshing elements and which will be described later, is inserted rotatably, a fastening hole 34 which is formed below the front-side second shaft hole 33 through burring machining for the single bolt 15A to penetrate to fix the body module of the meshing structure 100 to the inner panel of the door D, a threaded hole 35 which is formed outboard of the fastening hole 34 through burring machining for the bolt 15B to be screwed in, and a threaded hole 36 which is formed obliquely upwards of the front-side first shaft hole 32 through burring machining for the bolt 15C to be screwed in.

The back plate 4 is fixed to a rear side of the body 2 and has a rear-side first shaft hole forming portion 41 where a rear-side first shaft hole 411 is formed into which a small-diameter shaft portion 53 which is formed at the distal end portion of the collar-headed latch shaft 5 which penetrates the front-side first shaft hole 32 of the cover plate 3, a shaft hole 64 of the latch 6, which is one of the various meshing elements and which will be described later, and the cylindrical portion 25 of the body 2 is inserted while being prevented from being dislocated therefrom, a rear-side second shaft hole forming portion 42 where a rear-side second shaft hole 421 is formed into which a second shaft portion 72 of the pawl 7, which will be described later, is inserted rotatably, a support hole forming portion 43 where a support hole 431 is formed into which the shaft portion 26 of the body 2 is inserted, a threaded hole forming portion 44 where a threaded hole 441 is formed into which the bolt 15A which penetrates the mounding hole D1 of the inner panel of the door D, the fastening hole 34 of the cover plate 3 and the body 2 is screwed, and a holding portion 45 which can partially or entirely cover the bumper rubber assembling hole 24 of the body 2 from the rear side of the body 2.

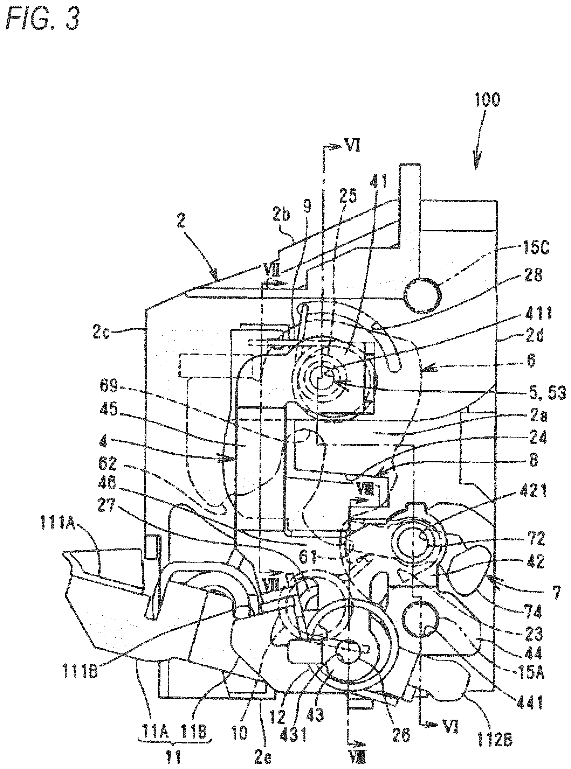

As shown in Fig. 3, the rear-side first shaft hole forming portion 41 is positioned above the striker entering groove 22 so as not to overlap a rear surface 2a of the striker entering groove 22 and is shaped so that the rear-side first shaft hole forming portion 41 neither projects outwards of an upper edge 2b and both side edges (left and right edges in Fig. 3) 2c, 2d of the body 2 nor expands to a portion which corresponds to the position of the bolt 15c which is screwed into the threaded hole 36 of the cover plate 3.

The holding portion 45 extends vertically over the rear surface 2a of the striker entering groove 22 while overlapping only part of the rear surface 2a and extends downwards from an outboard end portion (a left end portion in Fig. 3) of the rear-side first shaft hole forming portion 41 so as to close partially or entirely the bumper rubber assembling hole 24.

The rear-side second shaft hole forming portion 42 is positioned below the striker entering groove 22 so as not to overlap the rear surface 2a of the striker entering groove 22 and is shaped so as not to project outwards of both the side edges 2c, 2d and a lower edge 2e of the body 2. The rear-side second shaft hole forming portion 42 is formed at an end portion of an extending portion 46 which extends inboards of the vehicle (rightwards in Fig. 3) from a lower end of the holding portion 45.

The threaded hole forming portion 44 is positioned below the striker entering groove 22 so as not to overlap the rear surface 2a of the striker entering groove 22 and is shaped so as not to project outwards of both the side edges 2c, 2d and the lower edge 2e of the body 2 and not to extend to a portion which corresponds to the position of the bolt 15B which is screwed into the threaded hole 35 of the back plate 3. The threaded hole forming portion 44 is provided so as to extend downwards from a lower portion of the second shaft hole forming portion 42 to reach the vicinity of the rear-side second shaft hole 421.

The support hole forming portion 43 is positioned below the striker entering groove 22 so as not to overlap the rear surface 2a of the striker entering groove 22 and is shaped so as not to project outwards of both the sides 2c, 2d and the lower edge 2e of the body 2, being formed in a position which extends downwards from a substantially central portion of the extending portion 46.

As described above, the back plate 4 is shaped so as not to project outwards of an upper edge 2b, the side edges 2c, 2d and the lower edge 2e of the body 2 and not to extend to a portion which corresponds to the positions of the bolts 15B, 15C which are screwed into the threaded holes 35, 36 of the back plate 3. Namely, the back plate 4 overlaps the rear side of the body 2 in such a way as to expose the portion which corresponds to the positions of the bolts 15B, 15C, and therefore, compared with the prior art, the back plate 4 can be made smaller in size and lighter in weight.

The latch 6 and the pawl 7 are raised as the various meshing elements of the meshing structure 100. The latch 6 resides within the accommodating portion 21 defined between the body 2 and the cover plate 3 and is pivoted by the collar-headed latch shaft 5 which is oriented to the front so as to mesh with the striker S which enters the striker entering groove 22 and the cutout portion 31 when the door D is closed. The pawl 7 is pivoted so as to rotate about an axis which is oriented in a front-to-rear direction and can be brought into engagement with the latch 6 which is meshing with the striker S.

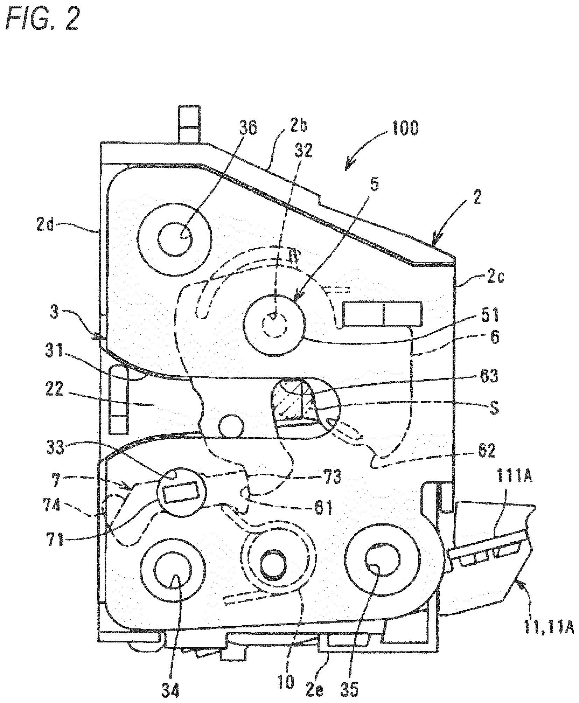

The latch 6 is pivoted by the collar-headed latch shaft 5 in the accommodating portion 21 of the body 2 and is biased in an opening direction (clockwise in Fig. 2 and counterclockwise in Fig. 3) by the spring 9 which is wound around an outer circumference of the cylindrical portion 25 of the body 2

A full latch claw portion 61 and a half latch claw portion 62 are provided on an outer circumference of the latch 6 so that the pawl 7 can be brought into engagement therewith. Similarly, a meshing groove portion 63 with which the striker S can mesh is provided on the circumference of the latch 6 to be positioned between the full latch claw portion 61 and the half latch claw portion 62. Similarly, a shaft hole 64 is provided in a central portion of the latch 6 so that the collar-headed latch shaft 5 is inserted thereinto so as to rotate relatively.

The collar-headed latch shaft 5 has a collar portion 51 which is brought into abutment with a circumference of the front-side first shaft hole 32 of the front surface of the cover plate 3, a shaft portion 52 which extends to the front from the collar portion 51 to pass through the front-side first shaft hole 32 of the cover plate 3, the shaft hole 64 of the latch 6 and the cylindrical portion 25 of the body 2, and the small-diameter shaft portion 53 which is disposed at a distal end side of the shaft portion 52, which is smaller in diameter than the shaft portion 52 and is inserted into the rear-side first shaft hole 411 of the back plate 4 so as to be prevented from being dislocated therefrom.

When used in the description and claims, the expression reading, "is inserted while being prevented from being dislocated therefrom" should be construed as including a configuration in which the distal end portion (the small-diameter shaft portion 53) of the latch shaft 5 is simply press fitted in the rear-side first shaft hole 411 of the back plate 4, a configuration in which an outer circumferential surface of the distal end portion of the collar-headed latch shaft 5 is knurled and the knurled distal end portion is press fitted in the rear-side first shaft hole 411, and a configuration in which the distal end portion of the collar-headed latch shaft 5 which projects from the rear-side first shaft hole 411 of the back plate 4 is crimped.

The spring 9 is disposed between the rear surface of the body 2 and the back plate 4, and a coil portion thereof is wound around the outer circumference of the cylindrical portion 25 of the body 2. One end of the spring 9 is hooked to the rear surface of the body 2, and the other end of the spring 9 passes through an arc-shaped hole 28 provided in the body 2 to be hooked to the latch 6, whereby the latch 6 is biased in one direction, that is, in the opening direction (clockwise in Fig. 2, and counterclockwise in Fig. 3).

The pawl 7 is formed from a synthetic resin material through molding with a plate-shaped core material which is pressed out of a metallic sheet material inserted therein. The pawl 7 can be assembled to the interior of the accommodating portion 21 through the pawl assembling hole 23 from the rear side of the body 2. A synthetic resin first shaft portion 71 which is formed at one end portion in the front-to-rear direction is inserted rotatably in the front-side second shaft hole 33 of the cover plate 3, and a synthetic resin second shaft portion 72 which is formed at the other end portion is inserted rotatably in the rear-side second shaft portion 421 of the back plate 4, whereby the pawl 7 is pivoted between the cover plate 3 and the rear-side second shaft hole forming portion 42 of the back plate 4. Additionally, the pawl 7 which is pivoted in the accommodating portion 21 is biased in an engaging direction (counterclockwise direction in Fig. 2, and clockwise in Fig. 3) by the spring 10 which is assembled to the rear surface side of the body 2. The second shaft portion 72 which is formed integrally with the pawl 7 which projects from the rear-side second shaft hole 421 of the back plate 4 is inserted into the rear-side second shaft hole 421 as it is without being crimped.

Further, an engaging portion 73 is provided on the pawl 7 between the first shaft portion 71 and the second shaft portion 72 so as to be selectively brought into engagement with the full latch claw portion 61 or the half latch claw portion 62 of the latch 6, and a releasing operating portion 74 is provided to a side of the second shaft portion 72 so as to be brought into abutment with a release lever (not shown) which is one the releasing elements of the operating structure 200 which operates in an interlocked fashion with a door opening operation of the outside handle (not shown) and the inside handle (not shown) which are provided on the door D.

The spring 10 is disposed between the rear surface of the body 2 and the back plate 4, and a coil portion thereof is wound around an outer circumference of the cylindrical portion 27 of the body 2. One end of the spring 10 is hooked to the body 2 and the other end thereof is hooked to the pawl 7, whereby the pawl 7 is biased in one direction, that is, in an engaging direction in which the pawl 7 is brought into engagement with the full latch claw portion 61 and the half latch claw portion 62 of the latch 6.

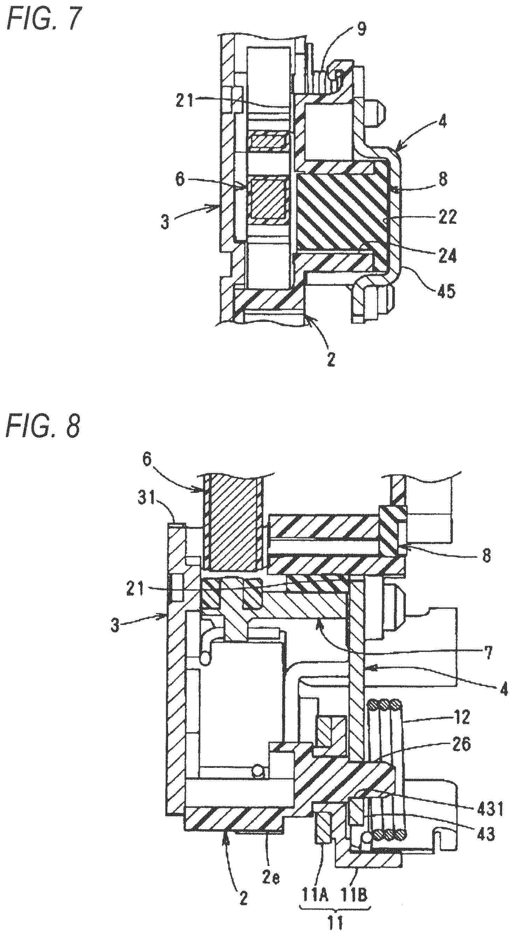

The bumper rubber 8 is assembled to a deep portion of the striker entering groove 22 through the bumper rubber assembling hole 24 from the rear side of the body 2 and functions to dampen impact generated by the striker S which enters the striker entering groove 22 and to prevent the looseness of the striker S when the striker S meshes with the meshing portion 63 of the latch 6. The back plate 4 is fixed to the rear surface of the body 2 after the bumper rubber 8 is assembled into the striker entering groove 22, whereby as clearly shown mainly in Figs. 3, 7, the bumper rubber 8 is fixed to the deep portion of the striker entering groove 22 while being held between the body 2 and the holding portion 45 of the back plate 4.

The outside lever 11 which is connected to the outside handle via a connecting member such as a rod which extends vertically so as to be interlocked with an opening operation of the outside handle and the spring 12 which applies a biasing force to the outside lever 11 in a predetermined direction are raised as the operating elements of the meshing structure 100.

The outside lever 11 is disposed between the rear surface of the body 2 and the support hole forming portion 43 of the back plate 4 and is pivoted by the shaft portion 26 of the body 2. The outside lever 11 is divided into a first lever 11A and a second lever 11B which can be interlocked with the first lever 11A. The spring 12 is supported on the support hole forming portion 43 of the back plate 4, and one end of the spring 12 is hooked to the first lever 11A and the back plate 4, and the other end thereof is hooked to the second lever 11B, whereby the spring 12 applies a biasing force to the first and second levers 11A, 11B in a counterclockwise direction.

The first and second levers 11A, 11B are held in a waiting position shown in Fig. 3 in such a state that the outside handle is not operated.

As a result of a connecting portion 111A which is provided at one end portion being connected to the outside handle via a connecting member, the first lever 11A rotates through a predetermined angle from the waiting position shown in Fig. 3 in the releasing direction (counterclockwise in Fig. 3) against the biasing force of the spring
12 in association with an opening operation of the outside handle.

One end portion 111B of the second lever 11B can be brought into abutment with the first lever 11A when the first lever 11A rotates in the opening direction (counterclockwise in Fig. 3), and the other end portion 112B thereof is connected to the releasing element of the operating structure 200, whereby the second lever 11B transmits a door opening operation of the outside handle to the pawl 7 via the releasing element of the operating structure 200 to cause the pawl 7 to operate in the releasing direction, enabling the execution of an opening operation of the door D.

### (Function of Door Latch device 1)

The door latch device 1 is fixed to the inner panel of the door D with the three bolts 15A to 15C. The bolt 15A penetrates the mounting hole D1 of the door D, the fastening hole 34 of the cover plate 3 and the body 2 to be screwed into the threaded hole 441 of the back plate 4. The bolts 15B, 15C penetrate the mounting holes D1, D1 of the door D to be screwed into the threaded holes 35, 36 of the cover plate 3, respectively.

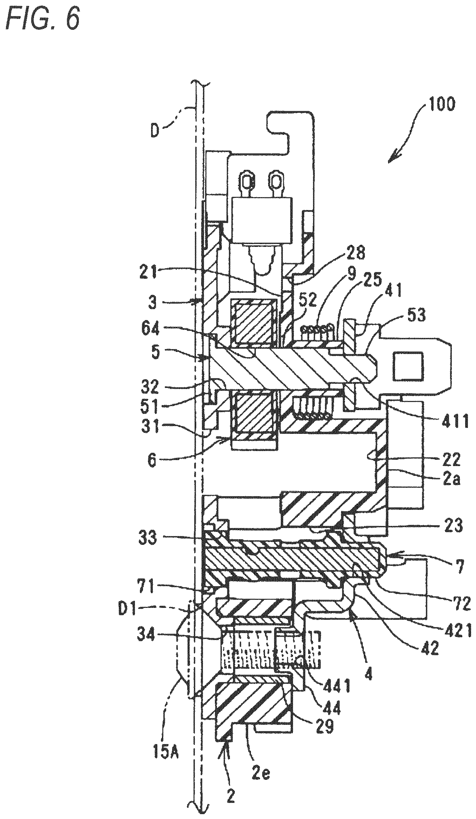

In such a state that the door latch device 1 is fixed to the inner panel of the door D, as shown in Fig. 6, the front surface of the cover plate 3 is faced and in abutment with an inner surface of the inner panel of the door D, and the front surface of the collar portion 51 of the collar-headed latch shaft 5 faces the inner surface of the inner panel of the door D. This causes the collar portion 51 of the collar-headed latch shaft 5 to be held between the front surface of the cover plate 3 and the inner surface of the inner panel of the door D to thereby prevent an axial movement of the collar-headed latch shaft 5. Additionally, the bolt 15A is
screwed into the threaded hole 441 which is positioned near the rear-side second shaft hole 421 of the back plate 4 so as to fixedly fasten the rear-side second shaft hole forming portion 42 to the body 2, and therefore, with the bolt 15A, the rear-side second shaft hole forming portion 42 on which a load acts concentrically can be fixed strongly and rigidly to the body 2 without applying dislocation preventive machining such as crimping to the second shaft portion 72 of the pawl 7, whereby the pawl 7 can be supported strongly and rigidly to obtain a sufficiently satisfactory meshing strength.

In addition, a metallic cylindrical collar 29 is interposed between the circumference of the fastening hole 34 of the rear surface of the cover plate 3 and the threaded hole forming portion 44 of the back plate 4, thereby making it possible to ensure strong and rigid fastening and fixing while maintaining a constant distance between the threaded hole forming portion 44 and the back plate 3. The fastening and fixing of the threaded hole forming portion 44 to the cover plate 3 can be changed variously. For example, the threaded hole forming portion 44 is caused to extend to the rear surface side of the cover plate 3 to be in contact with the circumference of the fastening hole 34 of the rear surface of the cover plate 3, and in this state, the threaded hole forming portion 44 may directly be fastened and fixed to the rear surface of the cover plate 3 with the bolt 15A.

With the door D staying open, the latch 6 is held in an open position where the latch 6 rotates clockwise through almost 90 degrees from a full latch position shown in Fig. 2. When the door D is closed, allowing the striker S to enter the striker entering groove 22 of the body 2 and the cutout portion 31 of the cover plate 3, the striker S meshes with the meshing groove portion 63 of the latch 6. This allows the latch 6 to rotate counterclockwise through a predetermined angle as shown in Fig. 2 from the open position against the biasing force of the spring 9 to a full latch position shown in Fig, 2 while passing a half latch position (the position between the open position and the full latch position).

When the latch 6 rotates to the full latch position, in the pawl 7, the engaging portion 73 is brought into engagement with the full latch claw portion 61 of the latch 6 by means of the biasing force of the spring 10, whereby a rotation of the latch 6 in the opening direction (clockwise in Fig. 2) from the full latch position to thereby restrain the door D in a fully closed position.

When the door D is in the fully closed position, in the event that the first lever 11A and the second lever 11B rotate in the releasing direction (counterclockwise in Fig. 3) against the biasing force of the spring 12 in association with an opening operation of the outside handle, the rotation is transmitted to the releasing operating portion 74 of the pawl 7 via the releasing elements of the operating structure 200, whereby the pawl 7 rotates through a predetermined angle in the releasing direction (clockwise in Fig. 2) against the biasing force of the spring 10, and the engaging portion 73 is disengaged from the full latch claw portion 61 of the latch 6, enabling the door D to be opened.

### (Assemblage of Door Latch device 1)

Firstly, the collar-headed latch shaft 5 is fixed to an assembling jig in such a way that the small-diameter shaft portion 53 is oriented upwards, and the cover plate 3 is placed on the collar-headed latch shaft 5 while allowing the shaft portion 52 to be inserted into the front-side first shaft hole 32.

Next, the shaft hole 64 of the latch 6 is placed on to the shaft portion 52 of the collar-headed latch shaft 5 which projects from the front-side first shaft hole 32 of the cover plate 3 to the rear surface, so that the latch 6 is set in an assembling position which is predetermined on the rear surface of the cover plate 3.

Next, the body 2 is placed on the cover plate 3 and the latch 6, and the shaft portion 52 of the collar-headed latch shaft 5 which projects from the shaft hole 64 of the latch 6 is inserted into cylindrical portion 25 of the body 2.

Next, the pawl 7, the bumper rubber 8, the spring 9, the spring 10, the first lever 11A, the second lever 11B, the back plate 4 and the spring 12 are assembled to their predetermined positions from the rear surface side of the body 2, that is, from the same direction as a direction in which the cover plate 3, the latch 6 and the body 2 are assembled.

The individual elements will be assembled as follows.

The pawl 7 is assembled by inserting the first shaft portion 71 and the engaging portion 73 into the accommodating portion 21 through the pawl assembling hole 23 and inserting the first shaft portion 71 into the front-side second shaft hole 33 of the cover plate 3. The bumper rubber 8 is assembled by being inserted into the striker entering groove 22 through the bumper rubber assembling hole 24 to be fixed to the deep portion in the striker entering groove 22. The spring 9 is wound around the outer circumference of the cylindrical portion 25 of the body 2 after the assemblage of the latch 6, whereby the spring 9 is assembled to the rear side of the body 2. The spring 10 is wound around the outer circumference of the cylindrical portion 27 of the body 2 after the assemblage of the pawl 7, whereby the spring 10 is assembled to the rear side of the body 2. The first lever 11A is assembled to the rear side of the body 2 by inserting the shaft portion 26 of the body 2 into an elongated hole 112A thereof. The second lever 11B is assembled to the rear side of the body 2 by inserting the shaft portion 26 into a shaft hole 113B thereof after the assemblage of the first lever 11A. The back plate 4 is fixed to the rear side of the body 2 by inserting the second shaft portion 72 of the pawl 7 and the shaft portion 26 of the body 2 into the rear-side second shaft hole 42 and the support hole 432, respectively, and inserting the small-diameter shaft portion 52 of the collar-headed latch shaft portion 5 into the rear side first shaft hole 411 in such a way as to be prevented from being dislocated therefrom after the assemblage of the pawl 7, the bumper rubber 8, the spring 9, the spring 10, the first lever 11A and the second lever 11B. The spring 12 is assembled to the rear side of the back plate 4 by being mounted on the support hole forming portion 43 of the back plate 4 after the assemblage of the back plate 4.

Thus, in the door latch device 1, with the collar-headed latch shaft 5 inserted into the front-side first shaft hole 32 of the cover plate 3, all the elements including the latch 6, the body 2, the pawl 7, the bumper rubber 8, the spring 9, the spring 10, the first lever 11A, the second lever 11B, the back plate 4 and the spring 12 can be assembled from the same direction, whereby the assembling work can be performed efficiently.

Further, the back plate 4 which is fixed to the rear surface of the body 2 has the rear-side first shaft hole forming portion 41 where the rear-side first shaft hole 411
is formed into which the small-diameter shaft portion 53 which is the distal end portion of the collar-headed latch shaft 5 which penetrates the front-side first shaft hole 32 of the cover plate 3 and the shaft hole 64 of the latch 6 is inserted while being prevented from being dislocated therefrom, the rear-side second shaft hole forming portion 42 where the rear-side second shaft hole 421 is formed into which the second shaft portion 72 which is formed at the other end portion of the pawl 7 is inserted rotatably, and the threaded hole forming portion 44 which is disposed near the rear-side second shaft hole forming portion 42 and where the single threaded hole 441 is formed into which the single bolt 15A is screwed. The back plate 4 is shaped so as not to extend to the position which corresponds to the plurality of bolts 15B, 15C other than the single bolt 15A.

This enables the vicinity of the rear-side second shaft hole forming portion 42 which supports rotatably the second shaft portion 72 of the pawl 7, that is, the threaded hole forming portion 44 can be fixed by fastening the single bolt 15A, and therefore, the second shaft portion 72 of the pawl 7 can be supported strongly and rigidly, and the back plate 4 can be made smaller in size while ensuring the same meshing strength as that provided by the prior art, thereby making it possible to make the door latch device 1 smaller in size and lighter in weight.

Thus, while the embodiment of the invention has been described heretofore, various modifications can be made to the embodiment without departing from the spirit and scope of the invention as below.

(a) The outside lever 11 is configured by a single lever.
(b) The small-diameter shaft portion 52 of the collar-headed shaft 5 which projects from the rear-side second shaft hole 42 of the back plate 4 is crimped.
c) The shaft portion 52 of the collar-headed shaft 5 is press fitted in the front-side first shaft hole 32 of the cover plate 3.

### Industrial Applicability

According to the invention, the door latch device can be provided in which with the latch shaft inserted into the front-side first shaft hole of the cover plate, the latch, the body, the pawl and the back plate can be assembled from the same direction, so that the assembling work can be performed efficiently and which enables the reduction in size of the back plate to thereby realize a reduction in size and weight thereof.

While the invention has been described in detail and with reference to the specific embodiment, it is obvious to those skilled in the art to which the invention pertains that various alterations and modifications can be made to the embodiment without departing from the scope of the invention as defined by the claims.

### Reference Signs List

- 1: door latch device
- 100: meshing structure
- 200: operating structure
- 201: casing
- 2: body
- 2a: rear surface
- 2b: upper edge
- 2c, 2d: side edge
- 2e: lower edge
- 21: accommodating portion
- 22: striker entering groove
- 23: pawl assembling hole
- 24: bumper rubber assembling hole
- 25: cylindrical portion
- 26: shaft portion
- 27: cylindrical portion
- 28: arc-shaped hole
- 3: cover plate
- 31: cutout portion
- 32: front-side first shaft hole
- 33: front-side second shaft hole
- 34: fastening hole
- 35, 36: threaded hole
- 4: back plate
- 41: rear-side first shaft hole forming portion
- 411: rear-side first shaft hole
- 42: rear-side second shaft hole forming portion
- 421: rear-side second shaft hole
- 43: support hole forming portion
- 431: support hole
- 44: threaded hole forming portion
- 441: threaded hole
- 45: holding portion
- 46: extending portion
- 5: collar-headed latch shaft
- 51: collar portion
- 52: shaft portion
- 53: small-diameter shaft portion
- 6: latch
- 61: full latch claw portion
- 62: half latch claw portion
- 63: meshing groove portion
- 64: shaft hole
- 7: pawl
- 71: first shaft portion
- 72: second shaft portion
- 73: engaging portion
- 74: releasing operating portion
- 8: bumper rubber
- 9: spring
- 10: spring
- 11: outside lever
- 11A: first lever
- 111A: connecting portion
- 112A: elongated hole
- 11B: second lever
- 111B: one end portion
- 112B: the other end portion
- 113B: shaft hole
- 12: spring
- 15A to 15C: bolt
- D: door
- D1: mounting hole
- S: striker.

## Claims

1. A vehicle door latch device (1) comprising:
a body (2) having an accommodating portion (21) that opens on a front surface;
a cover plate (3) that is fixed to the body (2) so as to close an opening of the accommodating portion (21);
a back plate (4) that is fixed to a rear surface of the body (2);
a latch (6), which is pivoted on a latch shaft (5) so as to be rotatable in the accommodating portion (21), and which is meshable with a striker entering a striker entering groove (22) provided in the body (2); and
a pawl (7), which is rotatably supported in the accommodating portion (21), and which is engageable with the latch (6) in a rotating direction,
wherein the cover plate (3) comprises:
a front-side first shaft hole (32), through which the latch shaft (5) penetrates;
a front-side second shaft hole (33), into which a first shaft portion (71) is inserted rotatably, the first shaft portion (71) being formed at one end portion of the pawl (7);
a fastening hole (34), through which a single bolt (15A) of a plurality of door fixing bolts penetrates; and
a plurality of threaded holes (35, 36), into which other bolts (15B, 15C), other than said single bolt (15A), of the plurality of door fixing bolts are screwed,
wherein the latch shaft (5) is formed into a collar-headed shape that is penetratable the front-side first shaft hole (32) and a shaft hole of the latch (6) from a front surface side of the cover plate,
wherein the back plate (4) comprises:
a rear-side first shaft hole forming portion (41) that forms a rear-side first shaft hole (411), wherein a distal end portion of the latch shaft (5) which penetrates the shaft hole of the latch (6) is inserted into the rear-side first shaft hole (411) while being prevented from being dislocated therefrom;
a rear-side second shaft hole forming portion (42) that forms a rear-side second shaft hole (421), into which a second shaft portion (72) is inserted rotatably, wherein the second shaft portion (72) is formed at another end portion of the pawl (7); and
a threaded hole forming portion (44) that forms a single threaded hole (441), into which said single bolt (15A) is screwed, wherein threaded hole forming portion (44) is disposed near the rear-side second shaft hole forming portion (42), and
wherein the back plate (4) is shaped so as not to extend to portions corresponding to positions of said other bolts (15B, 15C).

2. The vehicle door latch device (1) according to claim 1,
wherein the body (2) has a pawl assembling hole (23) that enables an assemblage of the pawl (7) into the accommodating portion (21) from a rear side of the body (2).

3. The vehicle door latch device (1) according to claim 1 or 2,
wherein a bumper rubber (8) is assembled into the striker entering groove (22) of the body (2) so that the striker can collide therewith, and
wherein the body (2) has a bumper rubber assembling hole (24) that enables the bumper rubber (8) to be assembled into the striker entering groove (22) from the rear side of the body (2).

4. The vehicle door latch device (1) according to claim 3,
wherein the back plate (4) comprises a holding portion (45) which is coverable the bumper rubber assembling hole (24) partially or entirely.

5. The vehicle door latch device (1) according to any one of claims 1 to 4,
wherein a shaft portion (26) is provided on the rear surface of the body (2) so as to be oriented in the same direction as that of the latch shaft (5), and
wherein an outside lever (11) is pivoted on the shaft portion (26) that is disposed between the rear surface of the body (2) and the back plate (4), wherein the outside lever (11) is connected to an operating handle provided on a door (D) for activating a door opening operation.

## Patentansprüche

1. Fahrzeugtürverriegelungsvorrichtung (1), umfassend:
einen Körper (2) mit einem Aufnahmeabschnitt (21), der sich auf einer Vorderseite öffnet;
eine Abdeckplatte (3), die an dem Körper (2) so befestigt ist, dass sie eine Öffnung des Aufnahmeabschnitts (21) schließt;
eine Rückenplatte (4), die an einer Rückseite des Körpers (2) fixiert ist;
eine Raste (6), die an einer Rastenwelle (5) geschwenkt wird, so dass sie in dem Aufnahmeabschnitt (21) drehbar ist, und die mit einem Verriegelungsbügel in Eingriff gebracht werden kann, der in eine Verriegelungsbügel-Eintrittsnut (22) eintritt, die in dem Körper (2) vorgesehen ist; und
eine Klinke (7), die drehbar in dem Aufnahmeabschnitt (21) gelagert ist, und die mit der Raste (6) in einer Drehrichtung in Eingriff gebracht werden kann, wobei die Abdeckplatte (3) umfasst:
eine vorderseitige erste Wellenöffnung (32), durch die die Rastenwelle (5) eingesetzt ist;
eine vorderseitige zweite Wellenöffnung (33), in die ein erster Wellenabschnitt (71) drehbar eingesetzt ist, wobei der erste Wellenabschnitt (71) an einem Endabschnitt der Klinke (7) ausgebildet ist;
eine Befestigungsöffnung (34), in die eine einzelne Schraube (15A) einer Vielzahl von Türbefestigungsschrauben eingesetzt ist; und
eine Vielzahl von Gewindebohrungen (35, 36), in die andere Schrauben (15B, 15C) als die einzelne Schraube (15A) aus der Vielzahl von Türbefestigungsschrauben geschraubt sind,
wobei die Rastenwelle (5) mit einer Form mit Kragenkopf ausgebildet ist, die von einer Vorderseite der Abdeckplatte aus durch die erste Wellenöffnung (32) und eine Wellenöffnung der Raste (6) eingesetzt werden kann,
wobei die Rückenplatte (4) umfasst:
einen rückseitigen ersten Wellenöffnungsausbildungsabschnitt (41), der eine rückseitige erste Wellenöffnung (411) bildet, wobei ein distaler Endabschnitt der Rastenwelle (5), der die Wellenöffnung der Raste (6) durchdringt, in die rückseitige erste Wellenöffnung (411) eingesetzt wird, während gleichzeitig verhindert wird, dass er daraus ausgedrückt wird;
eine rückseitigen zweiten Wellenöffnungsausbildungsabschnitt (42), der eine rückseitige zweite Wellenöffnung (421) bildet, in die ein zweiter Wellenabschnitt (72) drehbar eingesetzt ist, wobei der zweite Wellenabschnitt (72) an einem anderen Endabschnitt der Klinke (7) ausgebildet ist; und
einen Gewindebohrungsausbildungsabschnitt (44), der eine einzelne Gewindebohrung (441) bildet, in die eine einzelne Schraube (15A) geschraubt ist, wobei der Gewindebohrungsausbildungsabschnitt (44) nahe dem rückseitigen zweiten Wellenöffnungsausbildungsabschnitt (42) angeordnet ist, und
wobei die Rückenplatte (4) so geformt ist, dass sie sich nicht zu Abschnitten erstreckt, die Positionen der anderen Schrauben (15B, 15C) entsprechen.

2. Fahrzeugtürverriegelungsvorrichtung (1) nach Anspruch 1,
wobei der Körper (2) eine Klinkenmontageöffnung (23) aufweist, welche eine Montage der Klinke (7) in dem Aufnahmeabschnitt (21) von einer Rückseite des Körpers (2) aus ermöglicht.

3. Fahrzeugtürverriegelungsvorrichtung (1) nach Anspruch 1 oder 2,
wobei ein Gummipuffer (8) in die Verriegelungsbügel-Eintrittsnut (22) des Körpers (2) montiert ist, so dass der Verriegelungsbügel damit kollidieren kann, und
wobei der Körper (2) eine Gummipuffer-Montageöffnung (24) aufweist, welche eine Montage der Gummipuffers (8) in die Verriegelungsbügel-Eintrittsnut (22) von der Rückseite des Körpers (2) aus ermöglicht.

4. Fahrzeugtürverriegelungsvorrichtung (1) nach Anspruch 3,
wobei die Rückenplatte (4) einen Halteabschnitt (45) umfasst, der teilweise oder vollständig durch die Gummipuffer-Montageöffnung (24) abdeckbar ist.

5. Fahrzeugtürverriegelungsvorrichtung (1) nach einem der Ansprüche 1 bis 4,
wobei ein Wellenabschnitt (46) an der Rückseite des Körpers (2) vorgesehen ist, so dass er in derselben Richtung wie derjenige der Rastenwelle (5) ausgerichtet ist, und
wobei ein außenseitiger Hebel (11) an dem Wellenabschnitt (26) geschwenkt wird, der zwischen der Rückseite des Körpers (2) und der Rückenplatte (4) angeordnet ist, wobei der außenseitige Hebel (11) mit einem Bediengriff verbunden ist, der an einer Tür (D) vorgesehen ist, um einen Türöffnungsvorgang zu aktivieren.

## Revendications

1. Dispositif de verrouillage (1) de porte de véhicule, comprenant :
un corps (2) possédant une partie de réception (21) qui s'ouvre sur une surface avant ;
une plaque formant couvercle (3) qui est fixée sur le corps (2) de manière à fermer une ouverture de la partie de réception (21) ;
une plaque de fond (4) qui est fixée sur une surface arrière du corps (2) ;
un verrou (6) qui pivote sur un axe de verrou (5) de manière à pouvoir tourner dans la partie de réception (21) et qui peut s'engrener avec une gâche entrant dans une rainure d'entrée de gâche (22) ménagée dans le corps (2) ; et
un cliquet (7) qui est supporté en rotation dans la partie de réception (21) et qui peut se mettre en prise avec le verrou (6) dans une direction de rotation,
dans lequel la plaque formant couvercle (3) comprend :
un premier trou d'axe de côté avant (32), qui est traversé par l'axe de verrou (5) ;
un second trou d'axe de côté avant (33) dans lequel une première partie d'axe (71) est insérée de manière rotative, la première partie d'axe (71) étant formée au niveau d'une partie d'extrémité du cliquet (7) ;
un trou d'attache (34) qui est traversé par un boulon individuel (15A) d'une pluralité de boulons de fixation de porte ; et
une pluralité de trous taraudés (35, 36) dans lesquelles d'autres boulons (15B, 15C), différents dudit boulon individuel (15A), de la pluralité de boulons de fixation de porte sont vissés,
dans lequel l'axe de verrou (5) a une forme pourvue d'une tête à embase qui peut pénétrer dans le premier trou d'axe de côté avant (32) et dans un trou d'axe du verrou (6) depuis un côté de surface avant de la plaque formant couvercle,
dans lequel la plaque de fond (4) comprend :
une partie (41) formant un premier trou d'axe de côté arrière qui forme un premier trou d'axe de côté arrière (411), dans lequel une partie d'extrémité distale de l'axe de verrou (5) qui passe à travers le trou d'axe du verrou (6) est insérée dans le premier trou d'axe de côté arrière (411) d'une manière l'empêchant d'en sortir ;
une partie (42) formant un second trou d'axe de côté arrière qui forme un second trou d'axe de côté arrière (421) dans lequel une seconde partie d'axe (72) est insérée de manière rotative, dans lequel la seconde partie d'axe (72) est formée au niveau d'une autre partie d'extrémité du cliquet (7) ; et
une partie (44) formant un trou taraudé qui forme un trou taraudé individuel (441) dans lequel ledit boulon individuel (15A) est vissé, dans lequel la partie (44) formant un trou taraudé est située près de la partie (42) formant le second trou d'axe de côté arrière, et
dans lequel la plaque de fond (4) est profilée de manière à ne pas s'étendre vers des parties correspondant à des parties desdits autres boulons (15B, 15C).

2. Dispositif (1) de verrouillage de porte de véhicule selon la revendication 1,
dans lequel le corps (2) possède un trou (23) d'assemblage de cliquet qui permet un assemblage du cliquet (7) dans la partie de réception (21) depuis un côté arrière du corps (2).

3. Dispositif (1) de verrouillage de porte de véhicule selon la revendication 1 ou 2,
dans lequel un caoutchouc amortisseur (8) est assemblé dans la rainure d'entrée de gâche (22) du corps (2) de manière que la gâche puisse le heurter, et
dans lequel le corps (2) présente un trou (24) d'assemblage de caoutchouc amortisseur qui permet d'assembler le caoutchouc amortisseur (8) dans la rainure d'entrée de gâche (22) depuis le côté arrière du corps (2).

4. Dispositif (1) de verrouillage de porte de véhicule selon la revendication 3, dans lequel la plaque de fond (4) comprend une partie de maintien (45) qui peut couvrir partiellement ou entièrement le trou (24) d'assemblage de caoutchouc amortisseur.

5. Dispositif (1) de verrouillage de porte de véhicule selon l'une quelconque des revendications 1 à 4,
dans lequel une partie d'axe (26) se trouve sur la surface arrière du corps (2) de manière à être orientée dans la même direction que l'axe de verrou (5), et
dans lequel un levier extérieur (11) pivote sur la partie d'axe (26) qui est disposée entre la surface arrière du corps (2) et la plaque de fond (4), dans lequel le levier extérieur (11) est connecté à une poignée d'actionnement située sur une porte (D) pour activer une opération d'ouverture de porte.
